# EUROPEAN PATENT APPLICATION

(11) **EP 1 316 904 A1**
(43) Date of publication of application: **04.06.2003**
(21) Application number: 02011209.0
(22) Date of filing: 21.05.2002
(51) Int. Cl.: G06F 17/60

(54) **Information management system and method**

(30) Priority: 29.11.2001 JP 2001363566
(71) Applicant: Hitachi, Ltd., Chiyoda-ku, Tokyo 101-8010 (JP)
(72) Inventor: Hara, Misa, Hitachi, Ltd., Int. Property Group, Chiyoda-ku, Tokyo 100-8220 (JP); Akiyama, Hideyuki, Hitachi,Ltd., Int. Prop. Group, Chiyoda-ku, Tokyo 100-8220 (JP)
(74) Representative: Strehl Schübel-Hopf & Partner

(57) **Abstract**

An information managing system includes an information providing unit (101) having the promotion information (1601 to 1604) to deliver the promotion information (1601 to 1604), one terminal device (102) included in a plurality of terminal devices, receiving the promotion information (1601 to 1604) from the information providing unit (101); other terminal device (103) included in the plurality of terminal devices, receiving at least the promotion information (1601 to 1604), additional information (1701) added by the one terminal device (102) and an identifier (1702) indicating that at least the promotion information (1601 to 1604) is transfer information (1601 to 1604, and 1701 to 1703) from the one terminal device (102); and transaction unit (105) for judging whether or not the identifier indicates the transfer information transferred from the one terminal device (102), if the identifier indicates that the transfer information exists, transmitting at least an information identifier (J00001, Fig. 18) indicating the promotion information and a client identifier (U001, Fig. 18) indicating the one terminal device to the information providing unit, in accordance with a conclusion of a sales-object transaction performed through the other terminal device.

## Description

### BACKGROUND OF THE INVENTION

### Field of the Invention

The present invention relates to an information management for providing users with promotion information providing service using a communications network. Here, the promotion information refers to advertisement information on goods or the like, discount coupons thereon, or the like.

### Description of the Related Art

There has been increasing the number of business dealers that, using the communications network, deliver the promotion information such as the advertisement information or the discount coupons to users' mobile terminals with an intention of having the users utilize the promotion information. Also, users who actually utilize the discount coupons are now increasing in number. Meanwhile, in order to utilize the discount coupons, each user must make the access by himself or herself so as to acquire a discount coupon of the purpose. Accordingly, it is a common practice that each user pays for the communications fee at the time of acquiring the discount coupon.

The concept that the communications fee is made free-of-charge or discounted has been proposed in, for example, JP-A-6-46175 "CHARGE SYSTEM FOR MULTI MEDIA COMMUNICATION" and JP-A-10-32655 "CHARGING SYSTEM" as the following charge-billing method. At the time when a user receives the advertisement information, a part or the total of the communications fee is imposed onto the information providing dealer or the advertisement sponsor. In either of the proposed cases, however, the part or the total of the communications fee is just imposed onto the information providing dealer or the advertisement sponsor, depending on the received information amount at the time of receiving the information. Namely, in either of the cases, a communications fee that is generated at the time of transferring the received information to a third party is imposed onto neither the information providing dealer nor the advertisement sponsor.

If a user who has acquired a discount coupon using the communications network likes the discount coupon, the user is more or less likely to inform a third party, e.g., a user's friend, of the discount coupon. To the discount coupon providing dealer, this user's behavior can be considered to have the same meaning as a behavior that the user who has received the discount coupon is performing an advertisement of the discount coupon providing dealer toward the third party. Under the existing condition, however, the communications fee needed for the transfer is imposed onto the sender, and onto the receiver as well in some cases. As a result, the spread-out of the advertisement information based on the transfer among the users cannot be expected in the present situation.

### SUMMARY OF THE INVENTION

It is an object of the present invention to provide a technology for making it possible to impose a part or the total of the communications fee, which is generated when a user transfers the promotion information to another user such as advertisement information or discount information on goods, onto an information providing dealer that has provided these pieces of information.

In the present invention, there are provided the following configuration elements. An information providing site for delivering the promotion information such as the advertisement information or the discount coupons in a state of being edited in correspondence with a client to which the promotion information is to be delivered, an information communications terminal for transferring, to another user, the promotion information received from the information providing site, or for automatically adding information thereto at the time of performing the transfer, and a transaction site including an information acquiring-transmitting/receiving device for transmitting the promotion information, which has been delivered to the information communications terminal, to the information providing site along with a purchase performance-record of goods and an introduction fee for the transfer.

In the present invention, the promotion information, such as the advertisement information or the discount coupons on goods, is delivered from the information providing site to the information communications terminal in the state of being edited so as to be intended for the user to which the promotion information is to be delivered. If the information communications terminal that has received the delivery of the promotion information transfers the delivered promotion information to another information communications terminal, the information communications terminal adds the information to the effect that the promotion information transfer will be executed and a comment made by the user, then transferring the promotion information to the information communications terminal of the transfer destination.

If the information communications terminal that has received the transfer utilizes the promotion information, the information acquiring-transmitting/receiving device set up at a shop or the like reads the transfer information transferred to the information communications terminal, then transmitting the transfer information to the information providing site along with the purchase performance-record of goods and the introduction fee for the transfer.

The information providing site, based on the transfer information transmitted from the information acquiring-transmitting/receiving device, calculates a communications fee for the transferor.

As described above, according to the present invention, if the promotion information such as the advertisement information or the discount information on goods is transferred, and if the user of the transfer destination has utilized the transfer information, the transfer information can be managed at the information providing site. This condition makes it possible to impose the part or the total of the communications fee, which is generated when transferring the promotion information such as the advertisement information or the discount coupons, onto the information providing dealer that has provided these pieces of information. The amount of the communications fee has been determined by a contract made between the information providing dealer and a communications firm.

Also, when the information communications terminal transfers the received promotion information such as the advertisement information or the discount information, the information communications terminal transmits the execution of the transfer to the transfer destination and also to the information providing site simultaneously. This operation, even if the user of the transfer destination does not utilize the promotion information, makes it possible to impose the part or the total of the communications fee, which is generated when transferring the promotion information such as the advertisement information or the discount coupons, onto the information providing dealer that has provided these pieces of information.

Also, when transferring the promotion information such as the advertisement information or the discount coupons, an information amount to be added is calculated, then transferring this information amount as the transfer information simultaneously. This method also makes it possible to impose a part or the total of a communications fee, which is needed for transferring the added information, onto the information providing dealer that has provided these pieces of information.

Other objects, features and advantages of the invention will become apparent from the following description of the embodiments of the invention taken in conjunction with the accompanying drawings.

### BRIEF DESCRIPTION OF THE DRAWINGS

FIG. 1 is a diagram for illustrating the outline of a network environment in the present embodiment;
FIG. 2 is a block diagram for illustrating the system configuration of an information providing site in the present embodiment;
FIG. 3 is a block diagram for illustrating the system configuration of information communications terminals in the present embodiment;
FIG. 4 is a block diagram for illustrating the system configuration of a transaction site in the present embodiment;
FIG. 5 illustrates one example of the configuration of a client database in the present embodiment;
FIG. 6 illustrates one example of the configuration of a delivery information database in the present embodiment;
FIG. 7 illustrates one example of the configuration of a delivery history database in the present embodiment;
FIG. 8 illustrates one example of the configuration of an incentive rate database in the present embodiment;
FIG. 9 illustrates one example of the configuration of an each-client-basis incentive fee database in the present embodiment;
FIG. 10 illustrates one example of the configuration of an each-information-providing-dealer-basis settlement database in the present embodiment;
FIG. 11 illustrates one example of the configuration of an information providing dealer/shop database in the present embodiment;
FIG. 12 illustrates a flow of the processing in the case where information is delivered from the information providing site to the information communications terminal in the present embodiment;
FIG. 13 illustrates a flow of the processing in the case where one information communications terminal in the present embodiment transfers, to the other information communications terminal, information that the one information communications terminal has received;
FIG. 14 illustrates a flow of the processing in the case where an information acquiring-transmitting/receiving device set up at the shop in the present embodiment acquires necessary information so as to transmit the information to the information providing site;
FIG. 15 illustrates a flow of the processing by which the information providing site in the present embodiment calculates an incentive fee concerning the transfer;
FIG. 16 illustrates one example of the configuration of the information delivered from the information providing site to the information communications terminal in the present embodiment;
FIG. 17 illustrates one example of the configuration of the information transferred from the one information communications terminal in the present embodiment to the other information communications terminal;
FIG. 18 illustrates one example of the configuration of the information transmitted from the information acquiring-transmitting/receiving device in the present embodiment to the information providing site; and
FIG. 19 illustrates a flow of the processing for calculating the incentive fee for an amount needed for the transfer in the present embodiment.

FIG. 20 illustrates a flow of the processing when the other information communications terminal receives the information in the present embodiment.

### DETAILED DESCRIPTION OF THE EMBODIMENTS

Hereinafter, the explanation will be given below concerning one embodiment of the present invention.

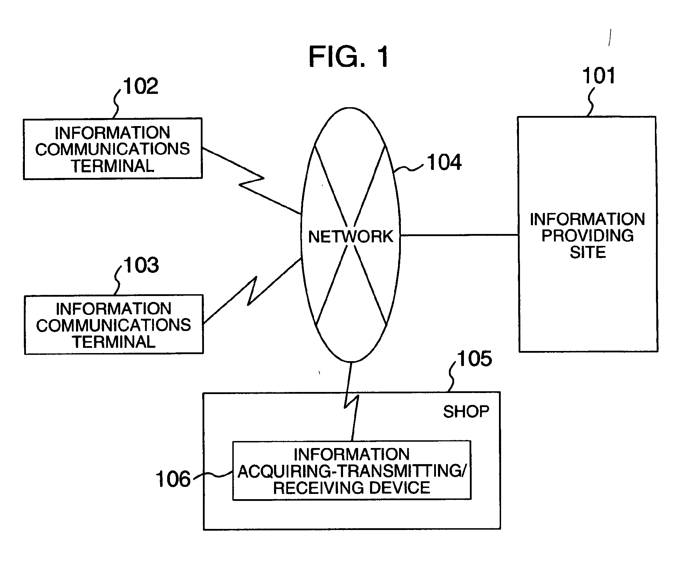

FIG. 1 shows an information management system that illustrates the outline of a network environment for implementing the present invention. As illustrated in FIG. 1, the information management system is constituted of an information providing site 101, one information communications terminal 102, other information communications terminal 103, a network 104, and as a transaction site, a shop 105 and an information acquiring-transmitting/receiving device 106. The shop 105 may be either a real shop that sales goods practically or a virtual shop that sales goods by using a communications network.

The information communications terminal 102 and the information communications terminal 103 may be mobile phones.

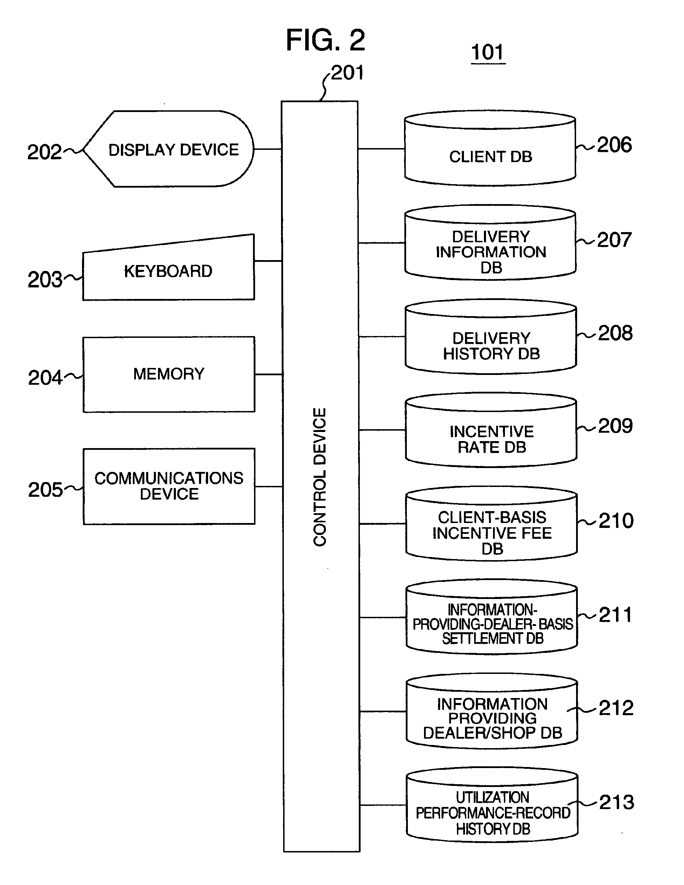

FIG. 2 is a block diagram for illustrating the system configuration of the information providing site 101 in the present embodiment. As illustrated in FIG. 2, the information providing site 101 in the present embodiment constitutes the following configuration components: a control device 201 for controlling the device as a whole; a display device 202 for displaying the state of a processing or the result of a processing; a keyboard 203 for giving some instruction from the outside; a main memory 204; a communications device 205 for performing communications with the information communications terminals and the shop; a client database (hereinafter, referred to as "DB") 206 for managing information on clients who wish the delivery of the promotion information; a delivery information DB 207 for managing the promotion information to be delivered; a delivery history DB 208 for managing the history of having actually delivered the promotion information to the clients; an incentive rate DB 209 for managing an incentive rate on each promotion information type basis; a client-basis incentive fee DB 210 for managing a client-basis incentive fee; an information-providing-dealer-basis settlement DB 211 for managing an information-providing-dealer-basis settlement calculated from an introduction fee for the promotion information toward each information providing dealer and the client-basis incentive fee; an information providing dealer/shop DB 212 for managing each information providing dealer and the shop; and a utilization performance-record history DB 213.

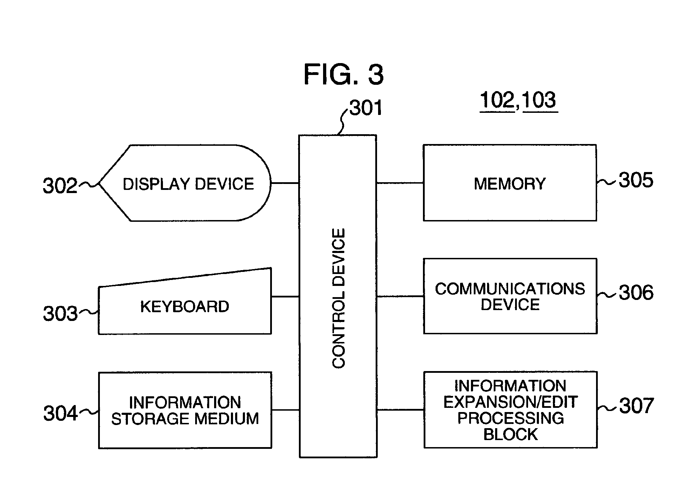

FIG. 3 is a block diagram for illustrating the system configuration of the information communications terminals 102 and 103.

The information communications terminals 102 and 103 constitute the following configuration components: a control device 301 for controlling each terminal as a whole; a display device 302 for displaying the promotion information transmitted; a keyboard 303 used when instructing a transfer, a termination, and the like; an information storing device 304 for storing the transmitted promotion information; an information expansion/edit processing block 307 including a computer program for transferring the transmitted promotion information and for editing the transmitted promotion information when performing the transfer; a memory 305; and a communications device 306.

Incidentally, the information expansion/edit processing block 307 may be installed in advance into the information communications terminals, or may be downloaded from the information providing site 101 when applying for the present service, or may be transmitted together with the promotion information such as the advertisement information so as to be processed.

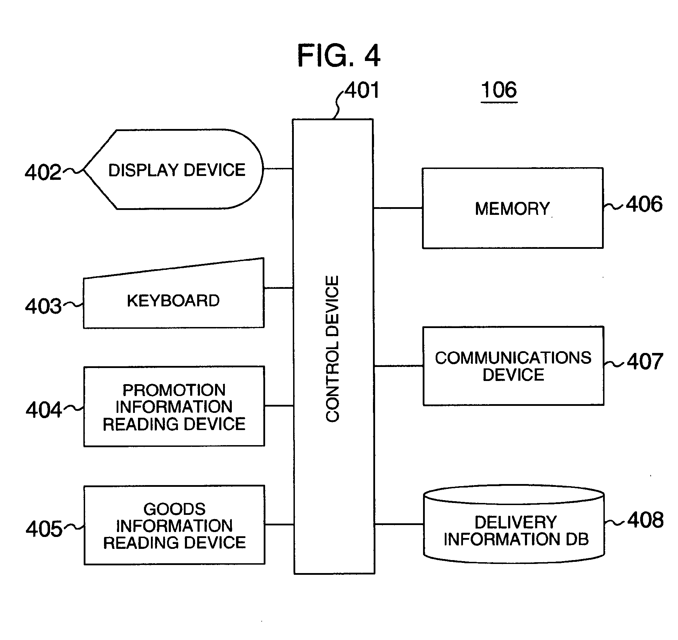

FIG. 4 is a block diagram for illustrating the system configuration of the information acquiring-transmitting/receiving device 106.

The information acquiring-transmitting/receiving device 106 is a device that is set up at the shop and that is used for transmitting, to the information providing site 101, the data on and the payment for goods that a user who visited the shop purchased, and the utilization performance-record of the information communications terminal that the user used. The information acquiring-transmitting/receiving device 106 includes the following configuration components: a control device 401 for controlling the information acquiring-transmitting/receiving device as a whole; a promotion information reading device 404 for reading in the promotion information or the like indicated from the user; a goods information reading device 405 for reading in the promotion information on goods or the like; a display device 402 for displaying the read promotion information or the situation of a processing; a keyboard 403 used for inputting additional information or the like; a memory 406; a communications device 407; and a delivery information DB 408 for managing the promotion information the delivery of which is requested in order to judge the validity of the contents of the promotion information that the user has indicated. The information acquiring-transmitting/receiving device 106 is so configured that the device 106 is capable of receiving the information issued from the information communications terminals 102 and 103. Namely, through the communications network 104, the user who has the information communications terminal can transmit the promotion information and the later-described transfer information to the information acquiring-transmitting/receiving device 106 without visiting the shop.

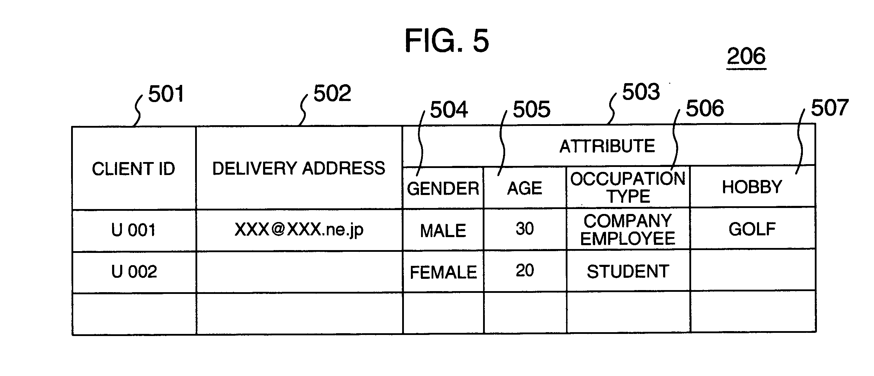

FIG. 5 illustrates one example of the configuration of the client DB 206 in the present embodiment.

As illustrated in FIG. 5, the client DB 206 constitutes a client ID 501 for uniquely identifying a client to which the delivery is to be performed, a delivery address 502 for indicating the delivery destination of the client, and a client attribute 503 for indicating the attribute of the client. The client attribute 503 constitutes a gender 504, an age 505, an occupation type 506, a hobby 507, and the like.

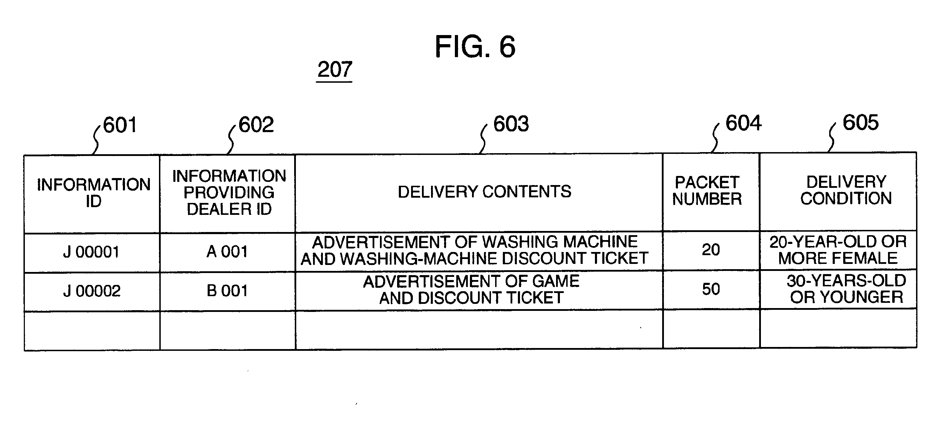

FIG. 6 illustrates one example of the configuration of the delivery information DB 207 in the present embodiment.

As illustrated in FIG. 6, the delivery information DB 207 constitutes an information ID 601 (i.e., identification code, which, hereinafter, will be referred to as "ID") for uniquely identifying promotion information to be delivered, an information providing dealer ID 602 for indicating the information providing dealer of the promotion information, a delivery contents 603 for indicating the contents of the promotion information to be delivered, the number of packets 604 of the promotion information to be delivered, and a delivery condition 605 for indicating the condition or the like of the client to which the delivery is to be performed.

In FIG. 6, although the delivery condition has been defined as the condition concerning the client, the delivery condition may also include the delivery time-period, the delivery timing, the number of the deliveries, or the like.

Also, the delivery contents 603 may be of either a text or a motion picture. Also, the delivery contents may be of a mixture of the text and the motion picture.

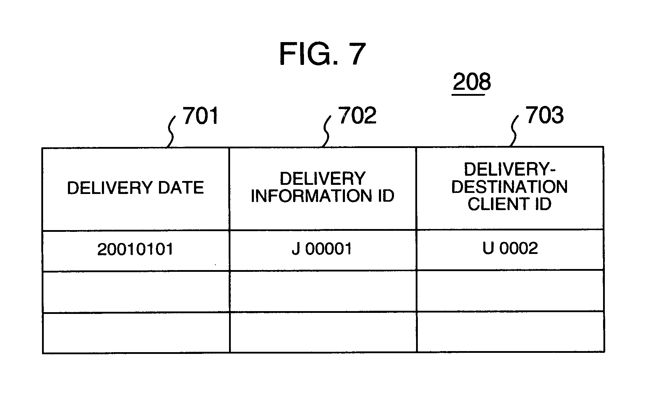

FIG. 7 illustrates one example of the configuration of the delivery history DB 208 in the present embodiment.

As illustrated in FIG. 7, the delivery history DB 208 constitutes a delivery date 701, a delivery information ID 702 for indicating the promotion information that has been delivered, and a delivery-destination client ID 703 for indicating the client to which the delivery has been performed.

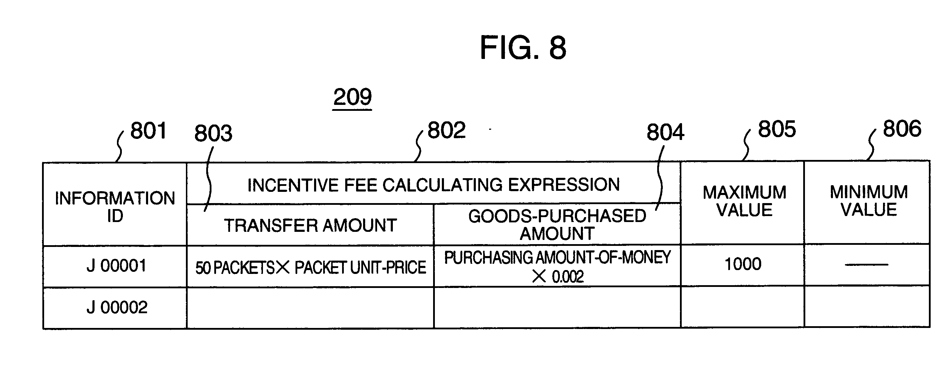

FIG. 8 illustrates one example of the configuration of the incentive rate DB 209 in the present embodiment. As illustrated in FIG. 8, the incentive rate DB 209 constitutes an information ID 801 and a calculating expression 802 for calculating an incentive fee for the promotion information. The incentive fee calculating expression 802 may be managed in a manner of being divided into a transfer amount 803 indicating a calculating expression of the amount by which the user has transferred the information, and a goods-purchased amount 804 of the incentive fee calculating expression assigned to the amount by which the user has purchased the goods or the like. Moreover, the incentive rate DB may include a maximum value 805 and a minimum value 806 that are to be assigned as the incentive fee.

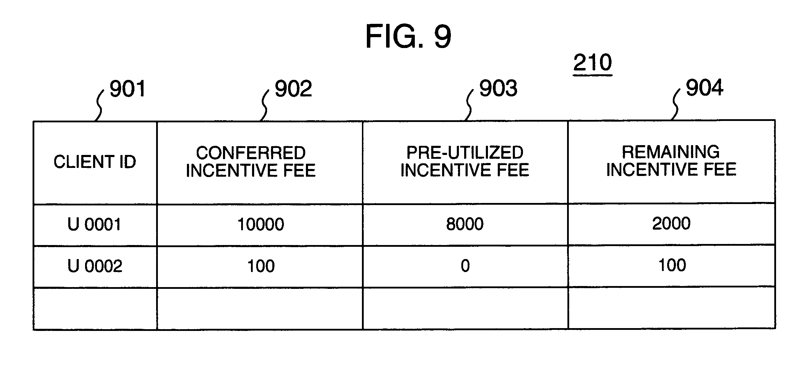

FIG. 9 illustrates one example of the configuration of the client-basis incentive fee DB 210 in the present embodiment. As illustrated in FIG. 9, the client-basis incentive fee DB 210 constitutes a client ID 901, a conferred incentive fee 902 for indicating an incentive fee conferred on the client so far, a pre-utilized incentive fee 903 utilized by the client so far, and a remaining incentive fee 904 that still remains at the present point-in-time.

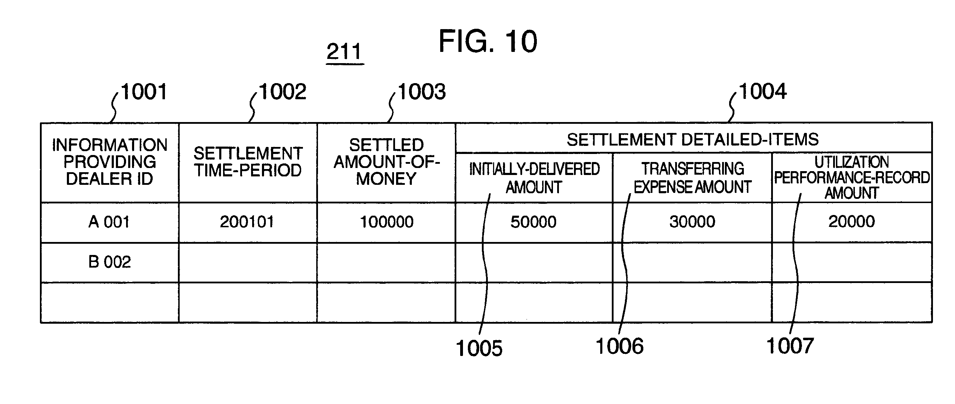

FIG. 10 illustrates one example of the configuration of the information-providing-dealer-basis settlement DB 211 in the present embodiment. As illustrated in FIG. 10, the information-providing-dealer-basis settlement DB 211 constitutes an information providing dealer ID 1001 for indicating an information providing dealer, a settlement time-period 1002, and a settled amount-of-money 1003. When wishing to manage the detailed-items of the settled amount-of-money, the settlement DB may also constitute a settlement detailed-items 1004. The settlement detailed-items 1004 constitutes an initially-delivered amount 1005 as the expense at which the information providing site 101 had performed the delivery at first, a transferring expense amount 1006 that is to be paid as the incentive fee when the user has performed the transfer, a utilization performance-record amount 1007 of the incentive fee which is conferred on the user in correspondence with a amount-of-money with which the user has purchased the goods or the like, and the like.

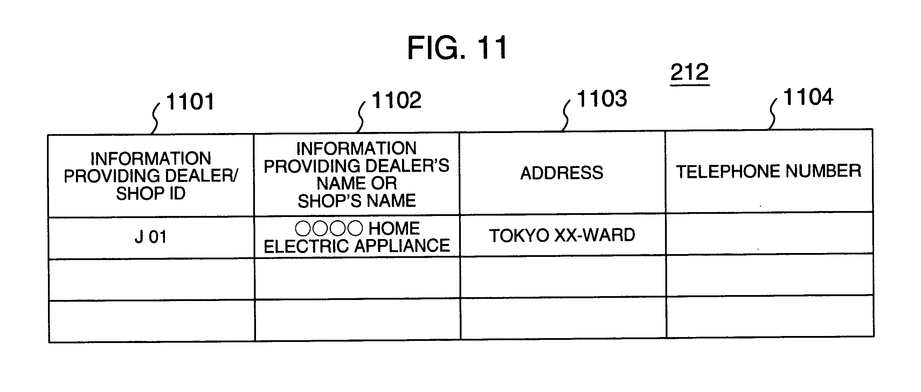

FIG. 11 illustrates one example of the configuration of the information providing dealer/shop DB 212 in the present embodiment.

As illustrated in FIG. 11, the information providing dealer/shop DB 212 constitutes an information providing dealer/shop ID 1101 for uniquely identifying an information providing dealer or a shop, the information providing dealer's name or the shop's name 1102, the information providing dealer's address or the shop's address 1103, the telephone number 1104, and the like.

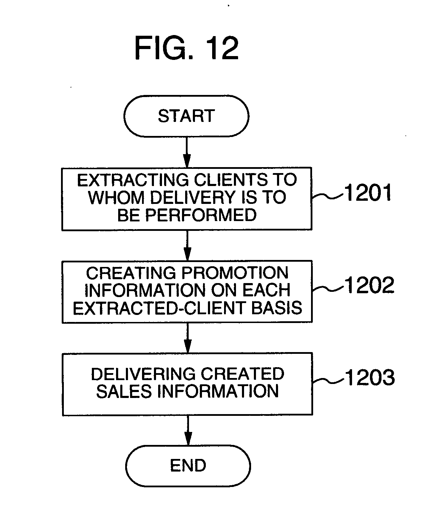

Next, referring to flow charts in FIGS. 12, 13, 14, 15, and 19, the explanation will be given below relating to flows of the processings to which the present invention has been applied.

FIG. 12 illustrates the flow chart that proceeds until the information providing site 101 has delivered the promotion information to the client.

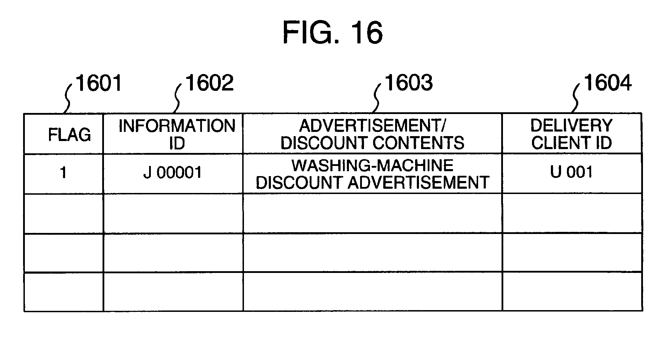

The information providing site 101 extracts, from the client DB 206, clients who satisfy the delivery condition 605 in the delivery information DB 207 (step 1201). Moreover, the site creates promotion information to be delivered on each extracted-client basis (step 1202). FIG. 16 illustrates one example of the configuration of the promotion information created on each client basis. As illustrated in FIG. 16, the promotion information created on each client basis constitutes a flag 1601 for indicating that the delivery service of advertisement information or the like will be performed, a delivery information ID 1602, an advertisement/discount contents 1603 as the promotion information to be delivered, and a delivery client ID 1604. It is desirable to transmit these pieces of information in the following manner, for example: the user finds it impossible to edit the information at the time of transferring the information from the information communications terminal 102 to the one 103; and the information acquiring-transmitting/receiving device 106 at the shop 105 finds it easy to read the information. The system corresponding to this manner is, for example, a bar code or the like. The information acquiring-transmitting/receiving device 106 can convert, into the bar code, the transfer information from the information communications terminals 102 and 103. After having created the promotion information to be delivered, the site delivers the promotion information to the applicable clients (step 1203).

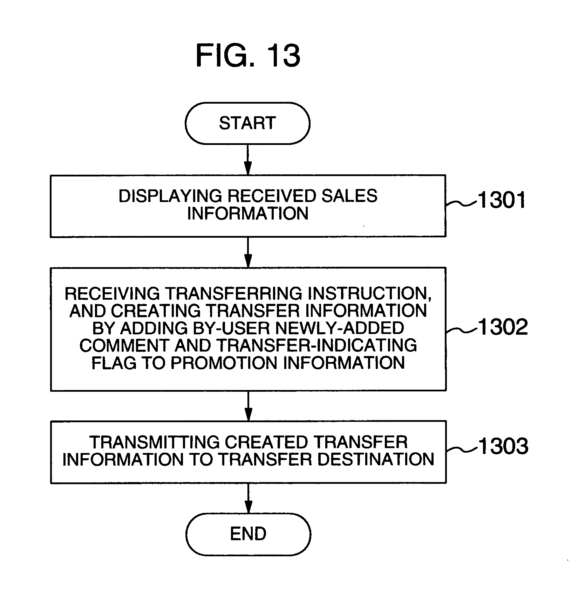

Next, referring to the flow chart in FIG. 13, the explanation will be given below relating to a flow of the processing that ranges from the information communications terminal 102 which receives the delivered promotion information and transfers the promotion information to the information communications terminal 103.

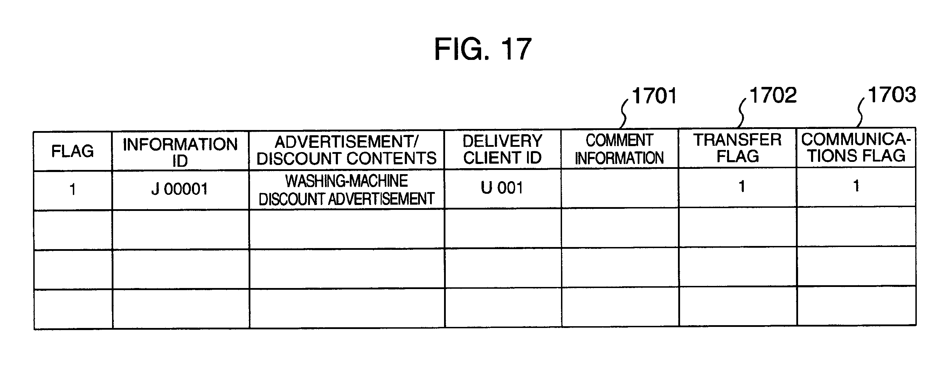

The information communications terminal 102 receives the delivered promotion information, then displaying the information on the display device 302 (step 1301). Having received a transferring instruction from the information communications terminal 103, the information communications terminal 102 adds, to the delivered promotion information, comment information newly added by the user of the information communications terminal 102 and a transfer flag for indicating the transfer, thereby creating the transfer information (step 1302). FIG. 17 illustrates one example of the configuration of the information to be transferred. The information to be transferred turns out to have a configuration obtained by adding the newly-added comment information 1701 added by the user and the transfer flag 1702 indicating the transfer information to be transferred, to the promotion information illustrated in FIG. 16, which had been delivered at first from the information providing site 101. A communications flag 1703 is a flag for indicating that the information communications terminal 103 transfers the transfer information to the information acquiring-transmitting/receiving device 106 via the communications network 104.

The information communications terminal 102 transmits the created transfer information to the information communications terminal 103 (step 1303).

Incidentally, in the present embodiment, the transfer information is transmitted to only the information communications terminal 103 of the transfer destination. However, the information expansion/edit processing block 307 in the information communications terminal 102 also makes it possible to transmit the performance-record of the transfer to the information providing site 101. In this case, regardless of whether or not the user of the transfer destination has utilized the promotion information including the advertisement information, the discount information, or the like, it becomes possible to cause the information providing dealer to pay for the incentive fee relating to the transfer.

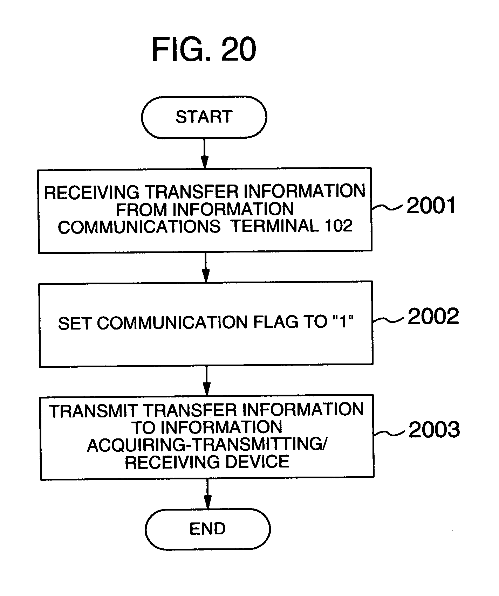

Processing will be explained with reference to a flowchart illustrated in FIG. 20 when the information communications terminal 103 receives the transfer information. The information communications terminal 103 receives the transfer information transferred from the information communications terminal 102 (step 2001). In the case of using the transfer information by a user through the information communications terminal 103, the communications flag 1703 illustrated on FIG. 17 is set to "1" (step 2002). The transfer information is transmitted to the information acquiring-transmitting/receiving device 106 (step 2003).

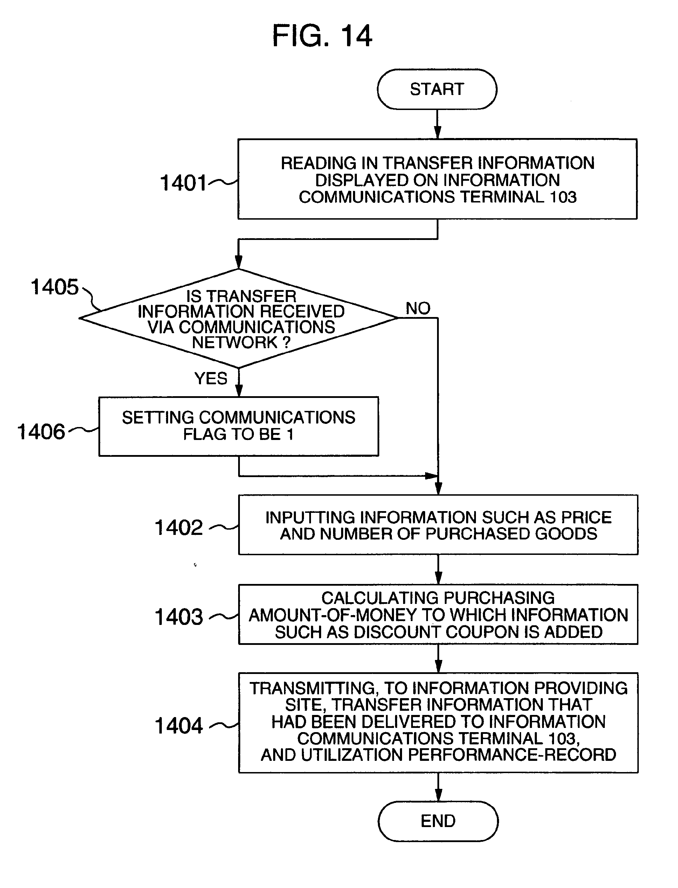

Next, referring to the flow chart in FIG. 14, the explanation will be given below relating to a flow of the processing in the information acquiring-transmitting/receiving device 106 set up at the shop 105 or the like when the information communications terminal 103 has utilized the transferred promotion information such as the advertisement information or the discount information at the shop or the like.

The information acquiring-transmitting/receiving device 106, using the promotion information reading device 404, reads in the transfer information displayed on the display device 302 in the information communications terminal 103 (step 1401). The communications flag 1703 in the transfer information is judged whether or not the flag indicates "1" (step 1405). That is, the information acquiring-transmitting/receiving device 106 judges whether or not the transfer information is received from the information communications terminal 103. If the communications flag 1703 does not indicate "1", the information acquiring-transmitting/receiving device 106 has read the bar-coded transfer information directly from the information communications terminal 103. If the communications flag 1703 is "1", the communications flag 1703 is set to "2" (step 1406). Next, the price and the number of the purchased goods are inputted using the goods information reading device 405 and the keyboard 403 (step 1402). Moreover, based on the information read in at the step 1401 and the information inputted at the step 1402, the purchasing amount-of-money and the like are calculated, then being displayed on the display device 402 (step 1403). The transfer information read in from the information communications terminal 103 and the utilization performance-record information such as the purchasing amount-of-money are transmitted to the information providing site 101 (step 1404).

Here, at the step 1402, the information acquiring-transmitting/receiving device 106 has a function of converting, into a signal corresponding to the bar code, the promotion information, the added comment information 1701, and the transfer flag 1702 which the information communications terminal 103 that has visited the shop 105 has. Making a comparison between this bar-code corresponding signal and the bar code of the purchased goods allows a transaction to be concluded between the user of the information communications terminal 103 and the shop 105.

If the user of the information communications terminal 103 wishes to purchase the desired goods from the shop 105 without visiting the shop 105, the information communications terminal 103 transmits the transfer information transferred from the information communications terminal 102 to the information acquiring-transmitting/receiving device 106 set up at the shop 105. The information acquiring-transmitting/receiving device 106 converts the transfer information into the bar-code corresponding the signal. Then, the comparison is made between this bar-code corresponding the signal and the bar code of the goods, thereby allowing the transaction to be concluded.

At the step 1404, the transfer information, which the information communications terminal 103 had transmitted to the information acquiring-transmitting/receiving device 106 via the communications network 104, and the transfer amount of the transfer information are also transmitted to the information providing site 101.

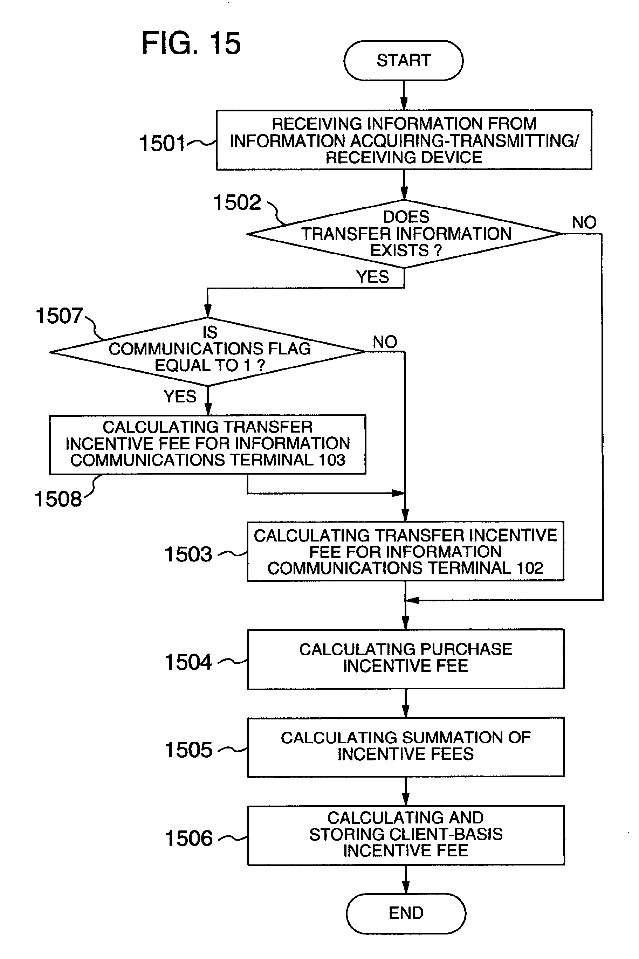

Next, FIG. 15 illustrates a flow of the processing by which the information providing site 101 receives the information transmitted from the information acquiring-transmitting/receiving device 106 and then calculates a client-basis incentive fee, i.e., the communications fee. At steps 1503, 1504, and 1505, the following communications fees will also be calculated: the communications fee with which the information communications terminal 102 had transferred the transfer information to the information communications terminal 103; and the communications fee with which the information communications terminal 103 had transmitted the transfer information to the information acquiring-transmitting/receiving device 106 via the communications network 104.

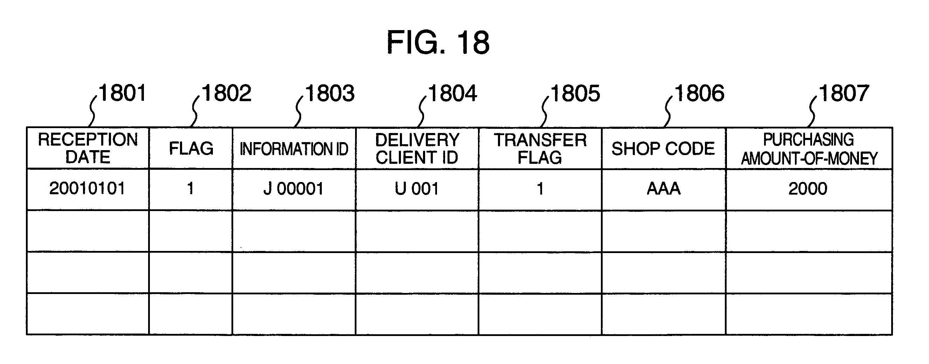

The utilization performance-record information transmitted from the information acquiring-transmitting/receiving device 106 is received by the communications device 205 in the information providing site 101, then being stored into the utilization performance-record history DB 213 (step 1501). FIG. 18 illustrates one example of the configuration of the utilization performance-record history DB 213.

As illustrated in FIG. 18, the utilization performance-record history DB 213 includes a reception date 1801, a flag 1802 for indicating that the delivery service of the advertisement information has been performed, an information ID 1803, a delivery client ID 1804, a transfer flag 1805 for indicating whether or not there exits the transfer of the utilization performance-record information, a shop code 1806 for uniquely identifying the shop 105 that has transmitted the utilization performance-record information, a purchasing amount-of-money 1807, and the like.

Next, from the transfer flag 1805 for the utilization performance-record information, it is judged whether or not there exits the transfer of the received utilization performance-record information (step 1502). If there exits the transfer, then, it is judged whether or not the utilization performance-record information has been received via the communications network 104 (step 1507). If the communications flag 1703 (FIG. 17) is 2, the transfer incentive fee for the information communications terminal 103 is calculated (step 1508). Next, based on the information of the transfer amount 803 out of the incentive fee calculating expression in the incentive rate DB 209, the transfer incentive fee for the information communications terminal 102 is calculated (step 1503). Moreover, based on the information of the goods-purchased amount 804 out of the incentive fee calculating expression in the incentive rate DB 209, the incentive fee at the time of purchasing the goods is calculated (step 1504). Furthermore, the summation of the incentive fee for the transfer and the incentive fee for the goods purchasing is calculated (step 1505). Finally, the conferred incentive fee 902 and the remaining incentive fee 904 for the delivery client ID 1804 in the client-basis incentive fee DB 210 are calculated, thereby updating the client-basis incentive fee DB 210 (step 1506).

Incidentally, although, in the present embodiment, the incentive fee for the goods-purchased amount has been also conferred on the client indicated by the delivery client ID, the incentive fee for the goods-purchased amount may be conferred on the purchaser, or on both the information communications terminal 102 of the transferor and the information communications terminal 103 of the purchaser. At that time, the information on the users is inserted into the utilization performance-record information transmitted from the information acquiring-transmitting/receiving device 106.

Also, in the case where there exists a plurality of information transfers, all the transfers are managed, and the incentive fees may be conferred on the transferor related with the transfers.

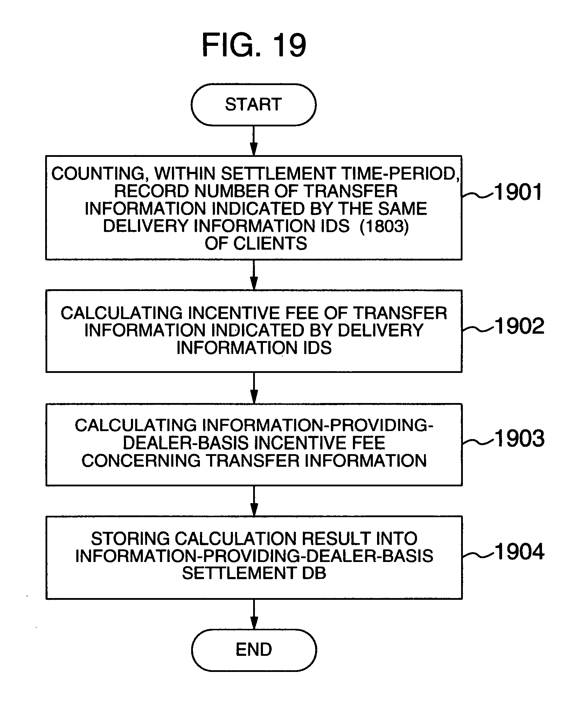

FIG. 19 illustrates a flow of the processing for imposing, onto the information providing dealer, the incentive fee generated when the user of the information communications terminal 102 has performed the transfer.

In the information providing site, the settlement time-period is judged based on the reception date 1801 (FIG. 18) in the utilization performance-record history DB 213 (FIG. 2). Within the same settlement time-period, the clients indicated by the delivery client IDs 1804 (FIG. 18) have the transfer information indicated by the same information IDs 1803 (FIG. 18) and indicated by the transfer flags 1805. The record number of this transfer information is counted (step 1901). Next, the incentive fee by the transfer amount indicated by the counted information IDs 1803 is calculated based on the data in the incentive rate DB 209 (FIG. 2) (step 1902). Moreover, of the information providing dealers entering the information providing site, the incentive fee for each of the information providing dealers of the same information IDs 1803 indicated by the transfer information is calculated (step 1903). Furthermore, the calculation result is stored into the information-providing-dealer-basis settlement DB 211 (step 1904).

Here, the calculation of the incentive fee can be executed in correspondence with the communications fee contracted on each information-providing-dealer basis.

Also, the transfer information, the incentive fee of the transfer information, and the transmission history of the transfer information can be stored into the client DB 206, the delivery information DB 207, and the delivery history DB 208 illustrated in FIG. 2 on the basis of each user who utilizes the information communications terminals 102 and 103.

Incidentally, the present embodiment has indicated only the calculation of the incentive fee related with the transfer. The initially delivered amount and an incentive fee saved by the user can also be charged in much the same way.

As having been explained so far, according to the present invention, even in the case where the promotion information such as the advertisement information or the discount coupons has been transferred between the users who utilize the communications, a part or the total of the communications fee generated at the time of the transfer is imposed onto the information providing site. This condition allows the invigoration of the sales communications for the promotion information such as the advertisement information or the discount coupons.

It should be further understood by those skilled in the art that the foregoing description has been made on embodiments of the invention and that various changes and modifications may be made in the invention without departing from the spirit of the invention and scope of the appended claims.

## Claims

1. An information managing system including an information providing site transmitting promotion information to an information terminal via a communications network, said information providing site absorbing a communications fee by itself, comprising:
information providing means (101) having said promotion information (1601 to 1604) to deliver said promotion information (1601 to 1604);
one terminal device (102) included in a plurality of terminal devices, receiving said promotion information (1601 to 1604) from said information providing means (101);
other terminal device (103) included in the plurality of terminal devices, receiving at least said promotion information (1601 to 1604), additional information (1701) added by said one terminal device (102), and an identifier (1702) indicating that at least said promotion information (1601 to 1604) is transfer information (1601 to 1604, arid 1701 to 1703) transmitted from said one terminal device (102); and
transaction means (105) for judging whether or not said identifier indicates said transfer information transferred from said one terminal device (102), if said identifier indicates that said transfer information exists, transmitting at least an information identifier (J00001, Fig. 18) indicating said promotion information and a client identifier (U001, Fig. 18) indicating said one terminal device to said information providing means, in accordance with a conclusion of a sales-object transaction performed through said other terminal device.

2. The information managing system as claimed in Claim 1, wherein said information providing means (101) is capable of delivering said promotion information (1601 to 1604) on said sales-object to said plurality of terminal devices via said communications network (104), and wherein said transaction means (105) includes a shop concerned directly with a purchase of said sales-object and a virtual shop related with the purchase of said sales-object through said communication network.

3. The information managing system as claimed in Claim 2, wherein said transaction means (105) includes an information acquiring-transmitting/receiving device (106) having a function of reading said transfer information (1601 to 1604, and 1701 to 1703) directly from said other terminal device (103).

4. The information managing system as claimed in Claim 2, wherein said transaction means (105) includes an information acquiring-transmitting/receiving device (106) for receiving said transfer information (1601 to 1604, and 1701 to 1703) from said other terminal device (103) via said communications network (104).

5. The information managing system as claimed in Claim 1, wherein said transfer information (1601 to 1604, and 1701 to 1703) includes said promotion information (1601 to 1604), said additional information (1701) including an introduction message added by said one terminal device (102), and said identifier (1702) for indicating that these pieces of information are said transfer information (1601 to 1604, and 1701 to 1703).

6. The information managing system as claimed in Claim 4, wherein said transaction means (105) includes said information acquiring-transmitting/receiving device (106) for converting, of said transfer information (1601 to 1604, and 1701 to 1703) transferred from said one terminal device (102) to said other terminal device (103), at least said promotion information (1601 to 1604), said additional information (1701), and said identifier (1702) into an identification code.

7. The information managing system as claimed in Claim 6, wherein said information acquiring-transmitting/receiving device (106) collates said identification code with said identification code of said sales-object, and transmits at least said information identifier (J00001, Fig. 18) and said client identifier (U001, Fig. 18) to said information providing means (101) after confirmed said conclusion of said sales-object transaction.

8. The information managing system as claimed in Claim 6, wherein, said information acquiring-transmitting/receiving device (106) transmits a transfer amount of said transfer information including at least said promotion information (1601 to 1604), said additional information (1701) and said identifier (1702).

9. The information managing system as claimed in Claim 3, wherein said information providing means (101) calculates a communications fee of said one terminal device (102) in accordance with said transfer amount.

10. The information managing system as claimed in Claim 7, wherein said information providing means (101) calculates a communications fee of said one terminal device (102) in accordance with said transfer amount, and calculates a communications fee of said other terminal device (103) related with said transfer information (1601 to 1604, and 1701 to 1703) transmitted from said other terminal device (103) to said information acquiring-transmitting/receiving device (106) via said communications network (104).

11. The information managing system as claimed in Claim 9, wherein said information providing means (101) adds, to said communications fee, an introduction fee with which said one terminal device (102) transferred said promotion information (1601 to 1604) to said other terminal device (103).

12. An information managing method of absorbing a communications fee by an information providing site transmitting promotion information to an information terminal via a communications network, comprising the steps of:
(a) delivering said promotion information (1601 to 1604) from information providing means (101);
(b) receiving said promotion information (1601 to 1604) by one terminal device (102) included in a plurality of terminal devices;
(c) adding additional information (1701) to said promotion information (1601 to 1604) by said one terminal device (102), setting an identifier (1702) indicating that said promotion information is transfer information, and transferring said promotion information to other terminal device (103) included in said plurality of terminal devices; and
(d) judging whether or not said identifier indicates said transfer information transferred from said one terminal device (102), if said identifier indicates that said transfer information exists, transmitting at least an information identifier (J00001, Fig. 18) indicating said promotion information and a client identifier (U001, Fig. 18) indicating said one terminal device to said information providing means, in accordance with a conclusion of a sales-object transaction performed through said other terminal device.

13. The method as claimed in Claim 12, wherein, at said step (d), said promotion information (1601 to 1604) delivered from said information providing means (101) is converted into an identification code.

14. The method as claimed in Claim 12, wherein, at said step (c), said additional information (1701) includes an introduction message from said one terminal device (102) to said other terminal device (103).

15. The method as claimed in Claim 12, wherein, at said step (d), said transfer information (1601 to 1604, and 1701 to 1703) delivered from said one terminal device (102) to said other terminal device (103) is converted into an identification code, and the converted identification code is collated with an identification code of said sales-object, said sales-object transaction being concluded if the identification codes coincide with each other.

16. The method as claimed in Claim 15, wherein, if both of said identification codes coincide with each other, a transfer amount of said transfer information (1601 to 1604, and 1701 to 1703) including at least said promotion information (1601 to 1604), said additional information (1701), and said identifier (1702) is transmitted from said transaction means (105) to said information providing means (101).

17. The method as claimed in Claim 16, wherein a communications fee of said one terminal device (102) is calculated by said information providing means (101) in accordance with said transfer amount of said transfer information (1601 to 1604, and 1701 to 1703).

18. The method as claimed in Claim 15, further comprising the steps of:
adding said additional information (1701) and said identifier (1702) indicating the transfer to said promotion information (1601 to 1604) transferred from said one terminal device (102) at said other terminal device (103) to be transmitted to said transaction means (105) via said communication network (104);
converting at least said promotion information to said identification code; and
collating the converted identification code with said identification code of said sales-object.

19. The method as claimed in Claim 18, wherein, if both of said identification codes coincide with each other, a transfer amount of said transfer information (1601 to 1604, and 1701 to 1703) including at least said promotion information (1601 to 1604), said additional information (1701), and said identifier (1702) is transmitted from said transaction means (105) to said information providing means (101).

20. The method as claimed in Claim 19, further comprising the steps of:
calculating a communications fee of said one terminal device (102) in accordance with said transfer amount by said information providing means (101); and
calculating a communications fee of said other terminal device (103) related with said transfer information (1601 to 1604, and 1701 to 1703) transmitted from said other terminal device (103) to said transaction means (105) via said communications network (104).
